# EUROPEAN PATENT APPLICATION

(11) **EP 4 704 433 A1**
(43) Date of publication of application: **04.03.2026**
(21) Application number: 25164909.1
(22) Date of filing: 20.03.2025
(51) Int. Cl.: H04N 23/61, H04N 23/65, G06V 10/82

(54) **METHOD FOR IMAGE ACQUISITION AND RECOGNITION, APPARATUS, AND NON-TRANSITORY COMPUTER-READABLE STORAGE MEDIUM**

(30) Priority: 27.08.2024 CN 202411187127
(71) Applicant: Beijing Xiaomi Mobile Software Co., Ltd., Beijing 100085 (CN)
(72) Inventor: LIU, Pan, Beijing, 100085 (CN); DOU, Zifei, Beijing, 100085 (CN)
(74) Representative: Dehns Germany Partnerschaft mbB

(57) **Abstract**

The present disclosure relates to a method for image acquisition and image recognition, an apparatus, an electronic device and a storage medium, and relates to the field of image processing technology. The method for image acquisition includes: acquiring first image data of a target scene; obtaining second image data by performing image compression on the first image data; and sending the second image data to a pre-bound image recognition device to cause the image recognition device to perform image recognition on the second image data through an image recognition model.

## Description

### TECHNICAL FIELD

The present disclosure relates to the field of image processing technology, and in particular to a method for image acquisition and recognition, an apparatus, an electronic device and a non-transitory computer-readable storage medium.

### BACKGROUND

With the advancement of technology, different types of cameras are emerging. Users may use mobile phones, digital cameras or other image acquisition devices to take pictures. In order to satisfy the user's requirements, image acquisition devices are gradually developed towards compactness and miniaturization. The application scenarios where the users require to perform image acquisition by using cameras are becoming more and more diverse, and different requirements have been proposed for the corresponding camera performance according to different application scenarios.

It should be noted that the information disclosed in the above background section is only used to enhance the understanding of the background of the present disclosure, and therefore may include information that does not constitute the related art known to those of ordinary skill in the art.

### SUMMARY

According to the present disclosure, there is provided a method for image acquisition and recognition, an apparatus, an electronic device and a non-transitory computer-readable storage medium.

According to a first aspect of embodiments of the present disclosure, there is provided a method for image acquisition, including:
acquiring first image data of a target scene;
obtaining second image data by performing image compression on the first image data; and
sending the second image data to a pre-bound image recognition device to cause the image recognition device to perform image recognition on the second image data through an image recognition model.

In some embodiments of the present disclosure, obtaining the second image data by performing image compression on the first image data includes:
obtaining the second image data by performing RAW domain compression on the first image data at a target compression ratio.

In some embodiments of the present disclosure, the target compression ratio is greater than or equal to 5.

In some embodiments of the present disclosure, sending the second image data to the pre-bound image recognition device includes:
transmitting the second image data to the image recognition device by using a short-distance communication technology.

In some embodiments of the present disclosure, acquiring the first image data of the target scene includes:
acquiring the first image data of the target scene according to a preset acquisition period;
where, the acquisition period is not higher than a preset period threshold.

In some embodiments of the present disclosure, acquiring the first image data of the target scene includes:
acquiring third image data, where an image resolution of the third image data is lower than an image resolution of the first image data;
performing image recognition on the third image data; and
in response to an image recognition result of the third image data being consistent with the target scene, acquiring the first image data of the target scene.

In some embodiments of the present disclosure, acquiring the first image data of the target scene includes:
in response to receiving an acquisition instruction sent by the image recognition device, acquiring the first image data of the target scene.

In some embodiments of the present disclosure, the provided method for image acquisition further includes:
controlling an image sensor to be in a dormant state during a non-acquisition time period;
where, the image sensor is configured to acquire the first image data of the target scene.

According to a second aspect of embodiments of the present disclosure, there is provided a method for image recognition, including:
receiving second image data corresponding to a target scene sent by a pre-bound image acquisition device;
obtaining fourth image data by performing image decoding on the second image data;
obtaining recognition information of the target scene by performing image recognition on the fourth image data through an image recognition model; and
outputting the identification information.

In some embodiments of the present disclosure, obtaining the fourth image data by performing image decoding on the second image data includes:
obtaining the fourth image data by performing RAW image decoding on the second image data.

In some embodiments of the present disclosure, receiving the second image data sent by the pre-bound image acquisition device includes:
receiving the second image data sent by the pre-bound image acquisition device by using a short-distance communication technology.

In some embodiments of the present disclosure, the provided method for image recognition further includes:
receiving user input information;
where, obtaining the recognition information of the target scene by performing image recognition on the fourth image data through the image recognition model includes:
obtaining the recognition information of the target scene by performing image recognition on the fourth image data based on the user input information through the image recognition model.

According to a third aspect of embodiments of the present disclosure, there is provided an apparatus for image acquisition, including:
an image sensor, configured to acquiring first image data of a target scene;
an image compression unit, configured to obtain second image data by performing image compression on the first image data; and
a microcontroller unit, configured to send the second image data to a pre-bound image recognition device to cause the image recognition device to perform image recognition on the second image data through an image recognition model.

According to a fourth aspect of embodiments of the present disclosure, there is provided an apparatus for image recognition, including:
an image receiving unit, configured to receive second image data sent by a pre-bound image acquisition device; where the second image data is obtained by the image acquisition device through performing image compression on first image data of a target scene;
an image decoding unit, configured to obtain fourth image data by performing image decoding on the second image data;
an image recognition unit, configured to obtain recognition information of the target scene by performing image recognition on the fourth image data through an image recognition model; and
an output unit, configured to output the identification information

According to a fifth aspect of embodiments of the present disclosure, there is provided an electronic device, including:
a processor; and
a memory, configured for storing an executable instruction by the processor;
where, the processor is configured to implement the method for image acquisition according to the first aspect.

According to a sixth aspect of embodiments of the present disclosure, there is provided an electronic device, including:
a processor; and
a memory, configured for storing an executable instruction by the processor;
where, the processor is configured to implement the method for image recognition according to the second aspect above.

According to a seventh aspect of the embodiments of the present disclosure, there is provided a non-temporary computer-readable storage medium. When an instruction in the storage medium is executed by a processor of a mobile terminal, the mobile terminal is caused to perform the method for image acquisition according to any one of the first aspect.

According to an eighth aspect of the embodiments of the present disclosure, there is provided a non-temporary computer-readable storage medium. When an instruction in the storage medium is executed by a processor of a mobile terminal, the mobile terminal is caused to perform the method for image recognition according to any one of the second aspect.

The technical solutions provided by the embodiments of the present disclosure may have the following beneficial effects.

In the present disclosure, an image acquisition device is provided to acquire first image data of a target scene; second image data is obtained by performing image compression on the first image data; and the second image data is sent to a pre-bound image recognition device to cause the image recognition device to perform image recognition on the second image data through an image recognition model. By performing image recognition in cooperation with the image recognition model, scene recognition can be performed on the acquired image to satisfy the user's requirements for scene recognition and provide a better user experience for the user.

It is to be understood that the foregoing general description and the following detailed description are exemplary and explanatory only and are not restrictive of the present disclosure.

### BRIEF DESCRIPTION OF THE DRAWINGS

The accompanying drawings here, which are incorporated in and constitute a part of the description, illustrate embodiments consistent with the present disclosure and, together with the description, serve to explain the principles of the present disclosure.
FIG. 1 is a flowchart of a method for image acquisition according to some embodiments of the present disclosure.
FIG. 2 is a first flowchart of an implementation process of step S102 according to some embodiments of the present disclosure.
FIG. 3 is a second flowchart of an implementation process of step S102 according to some embodiments of the present disclosure.
FIG. 4 is a third flowchart of an implementation process of step S102 according to some embodiments of the present disclosure.
FIG. 5 is a first flowchart of a method for image recognition according to some embodiments of the present disclosure.
FIG. 6 is a second flowchart of a method for image recognition according to some embodiments of the present disclosure.
FIG. 7 is a schematic diagram of an architecture of a constructed AI recognition system according to some embodiments of the present disclosure.
FIG. 8 is a schematic diagram of an application scenario of the AI recognition system shown in FIG. 7 according to some embodiments of the present disclosure.
FIG. 9 is a block diagram of an apparatus for image acquisition according to some embodiments of the present disclosure.
FIG. 10 is a block diagram of an apparatus for image recognition according to some embodiments of the present disclosure.
FIG. 11 is a block diagram of an electronic device according to some embodiments of the present disclosure.

### DETAILED DESCRIPTION

Some embodiments of the present disclosure will be described in detail here, and examples of them are shown in the accompanying drawings. When the following description refers to the drawings, unless otherwise indicated, the same numbers in different drawings represent the same or similar elements. Various changes, modifications and equivalents of the methods, apparatuses and/or systems described here will become apparent after understanding the present disclosure. For example, the order of operations described here is merely an example and is not limited to those orders set forth here, but can be changed as becomes apparent after understanding the present disclosure, except for operations that must be performed in a specific order. In addition, for clarity and brevity, descriptions of features known in the art may be omitted.

The implementations described in some embodiments of the present disclosure below do not represent all implementations consistent with the present disclosure. By contrast, they are merely examples of apparatuses and methods consistent with some aspects of the present disclosure as detailed in the appended claims.

The specific implementations of the embodiments in the present disclosure are described in detail below with reference to the accompanying drawings.

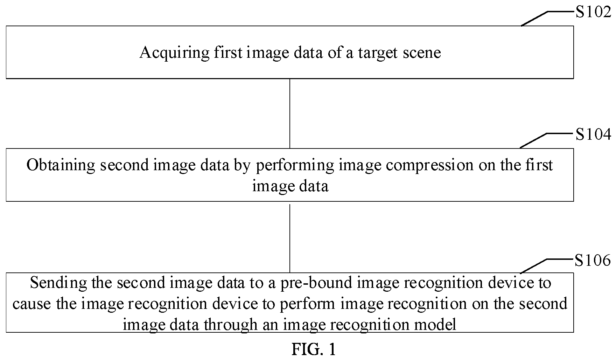

FIG. 1 is a flowchart of a method for image acquisition according to some embodiments of the present disclosure. As shown in FIG. 1, the method for image acquisition may be applied to an electronic device that can realize image acquisition, including but not limited to smart phones, wearable devices with cameras, cameras, camera devices, smart tablets and other terminal devices.

The method for image acquisition shown in FIG1 includes the following steps.

In step S102, first image data of a target scene is acquired.

It should be noted that in some embodiments of the present disclosure, the method for image acquisition shown in FIG. 1 is applied to an image acquisition device. The image acquisition device may acquire image data of different scenes, and acquire image data for the target scene in cooperation with an image recognition device pre-bound to the image acquisition device.

In some embodiments of the present disclosure, the target scene may be a scene where it is expected to capture an image by using an image recognition device. For example, when using AR (Augmented Reality) street scene navigation, the navigation device needs to acquire street scene images and perform image recognition on the street scene images to obtain street scene information for navigation. In this example, the street scene that needs to be captured is the target scene. The target scene may also be a scene where a user expects to capture an image. For example, if the user expects to know relevant information about a vase in front of him, the user may use an image acquisition device to perform image acquisition on the vase, and use an image recognition device to recognize the vase to obtain relevant information about the vase that the user expects to know. In this example, the scene where the vase is captured is the target scene. It will be understood by those skilled in the art that the above examples are only examples and are not intended to limit the scope of the target scene in the embodiments of the present disclosure.

In some embodiments of the present disclosure, the first image data is a RAW format image, which is an unprocessed original image data format and contains all original information captured by the sensor, including color, depth, exposure, white balance and other data.

In some embodiments of the present disclosure, in order to ensure accuracy during subsequent image processing and to provide sufficient image information for image recognition, the resolution of the first image data is higher than a preset resolution threshold, which may be 720p. For example, the resolution of the first image data may be 1080p.

In step S104, image compression is performed on the first image data to obtain second image data.

It should be noted that the first image data is the image data generated by the image sensor through capturing the target scene, and the data amount is relatively larger. In the example embodiment of the present disclosure, the first image data is a RAW format image, and the data size of a RAW image may be as high as tens of megabytes. If the image is transmitted in the original RAW format, not only the image acquisition device may consume more resources and storage space when processing the original RAW format image, but also the data amount transmitted by the image acquisition device to the image recognition device may also be relatively larger, which requires relatively greater energy for transmission, and is not conducive to realizing the low-power consumption of the image acquisition device. Therefore, image compression is performed on the first image data to obtain the second image data.

In some embodiments of the present disclosure, when step S104 is specifically implemented, RAW domain compression is performed on the first image data at a target compression ratio to obtain the second image data, in which the data amount is significantly reduced while sufficient image quality is retained. In order to achieve a higher compression ratio and reduce the data amount of the second image data as much as possible, a lossy compression algorithm or a hybrid compression algorithm may be used in the RAW domain compression. In the lossy compression algorithm, a part of the image quality is sacrificed to obtain a higher compression ratio, and redundant information in the image may be removed through transform coding, such as a discrete cosine transform (DCT) or a wavelet transform. The data amount may also be reduced by predicting the relationship between adjacent pixels through predictive coding. In the hybrid compression algorithm, by combining the advantages of lossless compression and lossy compression technology, key information is retained, and the data amount is reduced.

In some embodiments of the present disclosure, the target compression ratio is greater than or equal to 5, for example, the target compression ratio may be 10, 12 or 15. Those skilled in the art may appreciate that the above target compression ratio is only an example and is not intended to limit the protection scope of the embodiments of the present disclosure. The target compression ratio may be set according to actual needs as long as the data amount of the compressed second image data meets the transmission requirements.

In step S106, the second image data is sent to a pre-bound image recognition device, to cause the image recognition device to perform image recognition on the second image data through an image recognition model.

In an embodiment of the present disclosure, the image acquisition device is pre-bound to the image recognition device. For example, it may be that an AI camera is pre-bound to a mobile phone, and Bluetooth communication is pre-established between the AI camera and the mobile phone. In the specific implementation, the second image data is transmitted to the image recognition device by using short-range communication technology. The image acquisition device may use Bluetooth communication technology to wirelessly transmit the second image data to the image recognition device. The power consumption of the image acquisition device may be reduced by taking advantage of the low-power consumption characteristics of Bluetooth transmission.

In some embodiments of the present disclosure, the second image data may be transmitted to the image recognition device by using Bluetooth Low Energy (BLE) communication technology. BLE communication technology is specifically designed for low-power consumption applications, allowing devices to consume very little energy while transmitting data, and is very suitable for small battery-powered devices that need to run for a long time. In addition, BLE communication technology supports fast connection establishment and disconnection, so as to reduce unnecessary energy consumption. However, due to the low bandwidth of BLE communication technology, the data transmission rate is low. Therefore, in order to adapt to the low bandwidth, the data amount of the second image data may not be too large, so the target compression ratio is set.

In order to ensure the realization of the image acquisition function and to ensure that the device can operate for a certain period of time, the image acquisition device in the related art needs to be provided with a power supply module that can provide sufficient energy. However, the volume and weight of this power supply module cannot be further reduced, and a certain volume and weight still needs to be ensured for each component. As a result, the weight and volume of the existing image acquisition device are relatively larger, making it difficult to achieve lightweight and burden-free portability.

It can be seen that in order to reduce the power consumption of the device and realize the lightweight of the image acquisition device, the applicant proposes the method for image acquisition provided according to the embodiments of the present disclosure, in which the first image data of the target scene is compressed, and then the compressed second image data is sent to the pre-bound image recognition device, so that the image recognition device can use the image recognition model to perform image recognition on the second image data. Based on the characteristics that the image recognition model does not have high requirements on the accuracy and information amount of the input image data, the image can be compressed according to a higher target compression ratio, and the second image data can be transmitted to the image recognition device by using low-power communication technology, thus greatly reducing the power consumption during operation of the image acquisition device to realize the lightweight and portability of the device.

It can be seen from the above steps that, in the method for image acquisition, applied to the image acquisition device, provided according to the embodiments of the present disclosure, the first image data of the target scene is acquired, image compression is performed on the first image data to obtain the second image data, and the second image data is sent to a pre-bound image recognition device, so that the image recognition device performs image recognition on the second image data through the image recognition model. By performing image recognition in cooperation with the image recognition device and the image recognition model, scene recognition can be performed on the acquired image, to satisfy the user's requirements for scene recognition and provide a better user experience for the user.

In response to the fact that the image recognition model does not have high requirements on the clarity of image recognition, in the method for image acquisition, applied to the image acquisition device, provided according to the embodiments of the present disclosure, image compression may be performed after image acquisition to obtain the second image data, so as to greatly reduce the resources required for the image acquisition device to operate and transmit data, thus reducing the power consumption of the image acquisition device. Therefore, a smaller size and lower capacity power supply module may be used, thus providing a low-power and lightweight image acquisition device.

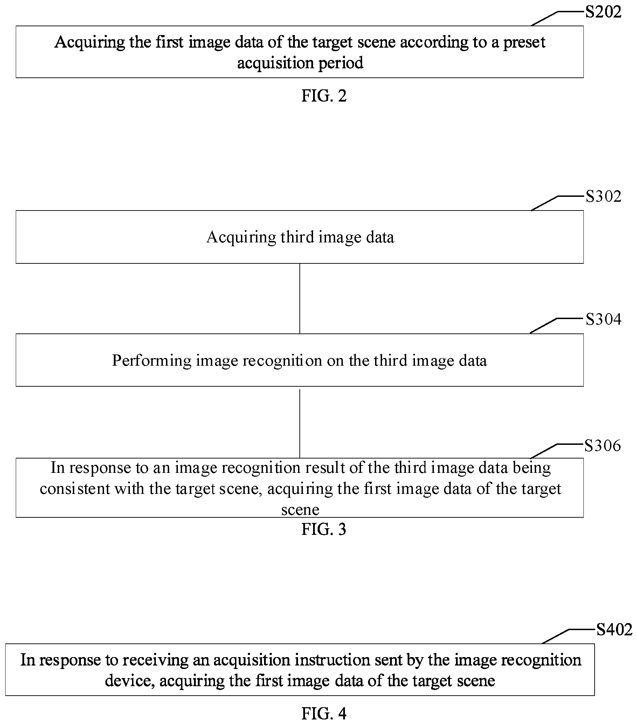

As shown in FIG. 2, FIG. 2 is a first flowchart of an implementation process of step S102 provided according to some embodiments of the present disclosure, which includes the following steps.

In step S202, the first image data of the target scene is acquired according to a preset acquisition period.

It should be noted that in order to further reduce the power consumption of the image acquisition device, the first image data may be acquired according to a preset acquisition period, and the acquisition period is not higher than a preset period threshold. It may be understood by those skilled in the art that the preset threshold is set in consideration of the actual needs of shooting and the low-power consumption requirements, which is not limited in the embodiments of the present disclosure here. For example, the preset period threshold may be 2 seconds, and correspondingly, the acquisition period may be 1 second. That is, the image acquisition device acquires the first image data of the target scene once every 1 second to obtain a first image.

In some embodiments of the present disclosure, the image acquisition device may convert an optical image into an electrical signal by setting an image sensor to perform image acquisition. That is, the image sensor is configured to acquire the first image data of the target scene. In the specific implementation, a low-power and low-cost CMOS sensor may be used to ensure low power consumption during operation of the image acquisition device.

In the present disclosure, the first image data of the target scene is acquired according to a preset acquisition period instead of performing shooting on the target scene in real time, so as to reduce the acquisition frequency of image sensor, thus reducing the times of image acquisition and data amount, and further reducing the power consumption during operation of the image acquisition device.

As shown in FIG. 3, FIG. 3 is a second flowchart of an implementation process of step S102 provided according to some embodiments of the present disclosure, which includes the following steps.

In step S302, third image data is acquired.

It should be noted that the image resolution of the third image data is lower than the image resolution of the first image data. In the specific implementation, the third image data may be acquired at regular intervals or continuously, and there is no restriction on the scene of image acquisition. The image acquisition device is used for image acquisition, but the resolution of the acquired image is not high, which is lower than the resolution of the first image data. Since the acquired third image data is not transmitted to the image recognition device for image recognition, the requirements for the third image data are lower than the requirements for the first image data. Therefore, in order to further reduce unnecessary power consumption of the device, the resolution of the acquired third image data is set to be not high.

In step S304, image recognition is performed on the third image data.

It should be noted that an image recognition algorithm may be used by the image acquisition device to perform image recognition on the third image data to determine whether the image recognition result of the third image data is consistent with the target scene. For example, if the target scene is a food scene, the image acquisition device may be controlled to acquire the third image data after the user enters the dining area. It may be understood that the image recognition result of the acquired third image data includes the environment scene, the table and chair scene, the person scene and the food scene.

In step S306, in response to the image recognition result of the third image data being consistent with the target scene, the first image data of the target scene is acquired.

In the embodiment of the present disclosure, in response to the image recognition result of the third image data being consistent with the target scene, the image acquisition device acquires the first image data, so as to ensure that, on the basis of ensuring that the image acquisition device may acquire images of the target scene, the number of high-resolution images acquired is reduced, thus reducing the resources consumed during image acquisition and reducing the power consumption during operation of the device.

In some embodiments of the present disclosure, the image acquisition device may perform image acquisition by setting an image sensor, that is, the image sensor is configured to acquire the first image data and the third image data. A neural processing unit (NPU) is set to perform image recognition on the third image data. After determining that the image recognition result of the third image data is consistent with the target scene, an instruction is issued to notify the image sensor to acquire the first image data. It should be noted that NPU is a chip specially used for neural network calculations. The NPU chip typically has the characteristics of high integration and low-power consumption, which can help the device execute artificial intelligence (AI) algorithms faster and improve the AI computing capabilities of the device.

In the present disclosure, the third image data is acquired in advance, image recognition is performed on the third image data, and the first image data is acquired in response to determining that the image recognition result is consistent with the target scene, so as to ensure that, on the basis of ensuring that the image acquisition device may acquire the image of the target scene, the number of high-resolution images acquired may be reduced, thus reducing the resources consumed during image acquisition and the data amount during image transmission, and reducing the power consumption during operation of the device.

As shown in FIG. 4, FIG. 4 is a third flowchart of an implementation process of step S102 provided according to some embodiments of the present disclosure, which includes the following steps.

In step S402, in response to receiving an acquisition instruction sent by the image recognition device, first image data of the target scene is acquired.

In some embodiments of the present disclosure, the image recognition device may be a smart terminal such as a mobile phone. When a user uses the smart terminal, an image acquisition device is required to cooperate in image acquisition. At this time, the image recognition device sends an acquisition instruction to the image acquisition device so that the image acquisition device acquires the first image data of the target scene.

For example, when a user uses the AR street scene navigation on a mobile phone, the image acquisition device is attached to the user's glasses frame in the form of a miniature camera. When it is needed to acquire a street scene image by using the mobile phone, on one hand, image acquisition may be performed by using the mobile phone's own camera. On the other hand, an acquisition instruction may be sent to the image acquisition device by the mobile phone. After receiving the acquisition instruction, the image acquisition device parses the acquisition instruction to determine that the target scene is a street scene, and controls the image sensor set in the image acquisition device to acquire the street scene image.

In the present disclosure, the first image data of the target scene is acquired in response to receiving the acquisition instruction sent by the image recognition device, so as to establish a connection between the image acquisition device and the image recognition device, thus realizing intelligent recognition, providing better services for the user, and improving the user's experience.

In embodiments of the present disclosure, there is provided a method for image acquisition, further including: controlling the image sensor to be in a dormant state during a non-acquisition time period. It should be noted that the image sensor is configured to acquire the first image data of the target scene, that is, the image sensor is set in the image acquisition device for image acquisition. During the non-image acquisition time period, the image sensor may be controlled to be in a dormant state to avoid the image sensor being in a working state all the time, thus reducing unnecessary power consumption during operation of the image acquisition device.

In some embodiments of the present disclosure, the image sensor may be set to perform scene recognition periodically at an image frame rate of 1 FPS for performing image data acquisition, that is, to capture one frame of image per second. The exposure time of the image sensor may be set to a short exposure time, and the AE/AWB (auto exposure/auto white balance) function of the image sensor may be set to avoid the problem of motion blur in the acquired image as much as possible. In other words, the image sensor only captures the image in a very short time within an acquisition period of 1 second; for example, the image sensor may capture one frame of image in 33 milliseconds, and the image sensor is in a dormant state during the rest of the time period, thus reducing the power consumption required by the image sensor, and ensuring low-power consumption of the image acquisition device.

According to the embodiments of the present disclosure, by realizing the low-power consumption of the image acquisition device, the image acquisition device may adopt a power supply unit with smaller size and lower capacity, so as to reduce the weight and volume of the power supply unit, thus greatly reducing the weight and volume of the image acquisition device and achieving lightweight of the image acquisition device. In a specific example, it may be achieved that the weight of the image acquisition device is less than 5g, thus making the image acquisition device more portable and allowing the user to carry the image acquisition device conveniently. Through the cooperation of the image acquisition device with pre-bound image recognition device such as a mobile phone, more intelligent services may be provided to the user, thus improving the user's experience and complying with the future development trend of intelligence.

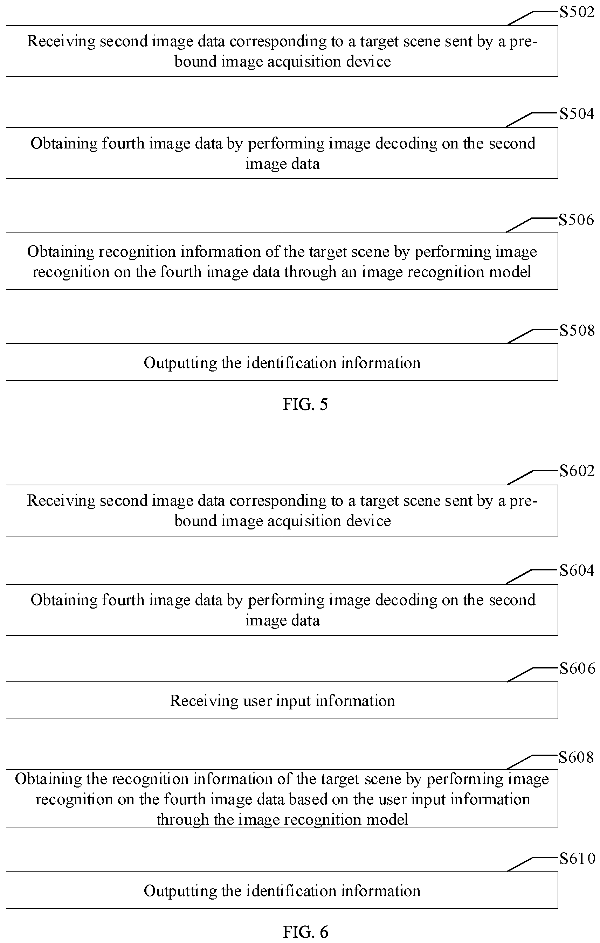

FIG. 5 is a first flowchart of a method for image recognition according to some embodiments of the present disclosure. As shown in FIG. 5, the method for image recognition may be applied to an electronic device, including but not limited to a terminal device, such as a smart phone, a wearable device, or a smart tablet. The electronic device may also include a server end such as a local server or a cloud server. The server end may be deployed in a computer cluster consisting of one computer or a plurality of computers.

The method for image recognition shown in FIG. 5 includes the following steps.

In step S502, second image data corresponding to a target scene sent by a pre-bound image acquisition device is received.

It should be noted that in some embodiments of the present disclosure, the method for image recognition shown in FIG. 5 is applied to an image recognition device. The image recognition device is pre-bound with an image acquisition device. For example, it may be that an AI camera is pre-bound with a mobile phone, and Bluetooth communication is pre-established between the AI camera and the mobile phone.

In some embodiments of the present disclosure, the second image data sent by the pre-bound image acquisition device is received by using short-range communication technology. In the specific implementation, the second image data is wirelessly received by using Bluetooth communication technology, and a communication network may be formed for image data transmission without the help of a third-party device such as a router.

In step S504, fourth image data is obtained by performing image decoding on the second image data.

In some embodiments of the present disclosure, the fourth image data is obtained by performing RAW image decoding on the second image data. In order to reduce the data amount during data transmission, when performing compression on the image data by the image acquisition device, RAW domain compression is performed on the image at a higher target compression ratio; and, when performing decoding on the second image data by the image recognition device, a RAW image decoding algorithm matching with the RAW domain compression is used to decode the second image data into the fourth image data.

In step S506, recognition information of the target scene image is obtained by performing image recognition on the fourth image data through an image recognition model.

In embodiments of the present disclosure, the image recognition model is a large AI model that performs recognition on the input image data, and is a large neural network model trained by using deep learning or other technologies. It usually has a large number of parameters and a complex architecture, and can achieve high-precision image recognition tasks.

In some embodiments of the present disclosure, the image recognition model may be a large intelligent recognition model deployed locally on the image recognition device, or it may be a large model deployed on the cloud. For example, it may be a multimodal large model. Recognition may be performed on the image data by calling the cloud service of the multimodal large model to ensure that when the processing capacity of the model deployed on the image recognition device is insufficient, recognition may be performed on the image data in a timely manner, and the recognition result may be fed back to the user.

In some embodiments of the present disclosure, the fourth image data obtained by decoding may contain a lot of irrelevant information, or may not meet the format requirements of the image recognition model. The image recognition device may further input the fourth image data into an image signal processor (ISP) set in the image recognition device to perform various processing operations such as noise suppression, white balance adjustment, color correction, and sharpening, so as to improve the recognition accuracy of the subsequent image recognition model, reduce the computing power consumption of image recognition model, improve recognition efficiency, and improve the user's experience.

In step S508, identification information is output.

In some embodiments of the present disclosure, the image recognition device outputs recognition information to the user to serve the user. Specifically, the recognition information may be fed back to the user in a visual manner through a display screen; or text to speech conversion may be performed on the recognition information, and the converted speech data may be notified to the user through a device such as a headset bound to the image recognition device, so as to further improve the user's experience.

It can be seen from the above steps that, in the present disclosure, the second image data corresponding to the target scene sent by the pre-bound image acquisition device is received, the fourth image data is obtained by performing decoding on the second image data, the recognition information of the target scene is obtained by performing image recognition on the fourth image data through the image recognition model, and the recognition information of the target scene is output. Therefore, it realizes that the matching recognition is performed on the image data acquired and compressed by the image acquisition device and the recognition information is fed back to the user, so as to realize the use of the image acquisition device and the image recognition device in cooperation with each other, and provide intelligent services for the user.

In an embodiment of the present disclosure, there is provided a method for image recognition. As shown in FIG. 6, FIG. 6 is a second flowchart of a method for image recognition according to some embodiments of the present disclosure.

In the embodiments of the present disclosure, steps S602, S604, and S610 in the method for image recognition shown in FIG. 6 correspond to steps S502, S504, and S508 in the method for image recognition shown in FIG. 5, respectively, which are not repeated here.

Based on the method for image recognition shown in FIG. 5, the method for image recognition shown in FIG. 6 may further include the following steps.

In step S606, user input information is received.

It should be noted that the user input information represents the user's requirements. For example, when a user wants to use a mobile phone to identify relevant information about a piece of cloth, such as price, purchase platform, fabric, style, etc., the user may input identifying the cloth in front of eyes and feeding back relevant information such as price, purchase platform, fabric, style, etc., by calling an intelligent large model tool on the mobile phone that may interact with the user, such as ChatGPT.

Accordingly, step S506 is changed to step S608.

In step S608, recognition information of the target scene image is obtained by performing image recognition on the fourth image data based on the user input information through an image recognition model.

In the above embodiments, in response to the input information, the mobile phone issues an acquisition instruction to the image acquisition device so that the image acquisition device captures the image of the cloth. After receiving the image of the cloth, the mobile phone inputs the image of the cloth and the input user's requirements for identifying the cloth in front of eyes and feeding back relevant information such as price, purchase platform, fabric, style, etc., into ChatGPT. ChatGPT understands the user's requirements based on the input user's requirement information, and performs recognition on the image of the cloth in combination with the understood user's requirements to obtain recognition information, thus satisfying the user's requirements.

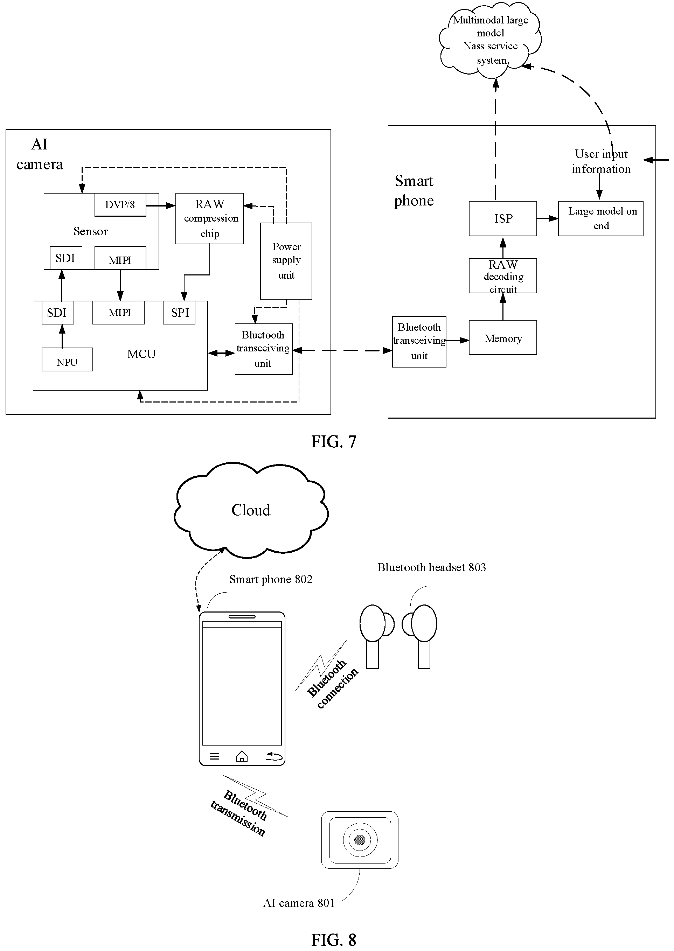

FIG. 7 is a schematic diagram of an architecture of an AI recognition system constructed by applying the method for image acquisition and the method for image recognition provided by the embodiments of the present disclosure, according to some embodiments of the present disclosure. It can be seen from FIG. 7 that the AI recognition system includes two parts, one part is an AI camera to which the method for image acquisition provided by the embodiment of the present disclosure is applied, and the other part is a smart phone to which the method for image recognition provided by the embodiments of the present disclosure is applied.

The AI camera includes an image sensor (Sensor), a RAW compression chip, a low-power consumption microcontroller unit (MCU), a Bluetooth transceiving unit and a power supply unit.

Among them, the image sensor is provided with a DVP (Digital Video Port) /8 and an MIPI (Mobile Industry Processor Interface) to transmit the image data output by the Sensor. The image sensor transmits the acquired first image data to the RAW compression chip through the DVP /8 for RAW domain compression, and the compression ratio is not less than 10, but it may also achieve almost visual lossless after compression. The RAW compression chip is a hardware compression circuit to implement the RAW domain compression algorithm. The RAW compression chip sends the compressed second image data to the SPI (Serial Peripheral Interface) set on the MCU. After receiving the second image data, the MCU transmits the second image data to the smart phone through the Bluetooth transceiving unit that is set.

The image sensor sends the acquired third image data to the MCU through the MIPI. The MCU uses the set NPU to perform image recognition on the third image data. When it is determined that the image recognition result is consistent with the target scene, the NPU issues an acquisition instruction for the first image data, which is sent to the image sensor via the SDI (Serial Digital Interface) set in the MCU to control the image sensor to perform image acquisition.

After the Bluetooth transceiving unit of the AI camera receives the acquisition instruction sent by the smart phone, the MCU analyzes the acquisition instruction to generate an image acquisition instruction, which is sent to the image sensor via the SDI set in the MCU to control the image acquisition device to acquire the first image data of the target scene.

The power supply unit provides power for the Sensor, the RAW compression chip, the MCU and the Bluetooth transceiving unit, respectively, to provide the energy required for operation.

The architecture of the smart phone side includes a Bluetooth transceiving unit, a memory, a RAW decoding circuit, an ISP, and a large model on end. After receiving the second image data sent by the AI camera, the Bluetooth transceiving unit first stores the second image data in the memory. The RAW decoding circuit retrieves the second image data from the memory to perform RAW image decoding to obtain the fourth image data, and inputs the fourth image data into the ISP for image processing. The processed image data is input into the large model on end to realize image recognition, and the large model on end may also receive information input by the user. When the processing capacity of the large model on end is insufficient, the smart phone inputs the processed image data into the multimodal large model Nass service system on the cloud via the network connection, so as to realize image recognition via the computing power of the large model on the cloud. The smart phone may also upload the information input by the user to the large model on the cloud.

FIG. 8 is a schematic diagram of an application scenario of the above-mentioned AI recognition system.

In FIG. 8, in this application scenario, the AI camera 801 performs image acquisition on the target scene, and transmits the compressed image data to the smart phone 802 via Bluetooth. After receiving the compressed image data, the smart phone 802 performs decoding on the compressed image data and performs recognition by using a large model to obtain the identification information required by the user, and converts the identification information into speech data, which is transmitted to the Bluetooth headset 803 worn by the user via Bluetooth communication to notify the user.

Since the weight of the AI camera does not exceed 5g, the AI camera may be attached to the glasses leg near the hinge by magnetic attraction, and it will not cause the problem of glasses weight balance. A magnetic attraction structure is set on the shell of the AI camera, through which the AI camera is placed on the glasses leg near the hinge.

It should be noted that the acquisition, storage, use, and processing of data in the technical solution of the present disclosure comply with the relevant provisions of national laws and regulations.

The following are apparatus embodiments of the present disclosure, which may be used to perform the method embodiments of the present disclosure. For details not disclosed in the apparatus embodiments of the present disclosure, reference may be made to the method embodiments of the present disclosure.

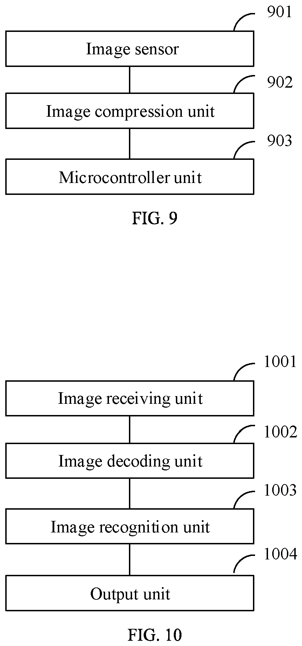

FIG. 9 is a block diagram of an apparatus for image acquisition according to some embodiments of the present disclosure. Referring to FIG. 9, the apparatus includes an image sensor 901, an image compression unit 902, and a microcontroller unit 903.

The image sensor 901 is configured to acquire first image data of a target scene.

The image compression unit 902 is configured to obtain second image data by performing image compression on the first image data.

The microcontroller unit 903 is configured to send the second image data to a pre-bound image recognition device to cause the image recognition device to perform image recognition on the second image data through an image recognition model.

It should be noted that the apparatus of this embodiment can be applied to an image acquisition device.

In some embodiments of the present disclosure, the image sensor 901 is configured to acquire first image data of the target scene according to a preset acquisition period, where the acquisition period is not higher than a preset period threshold.

In some embodiments of the present disclosure, the image sensor 901 is configured to: acquire third image data, where the image resolution of the third image data is lower than the image resolution of the first image data; perform image recognition on the third image data; and in response to the image recognition result of the third image data being consistent with the target scene, acquire the first image data of the target scene.

In some embodiments of the present disclosure, the image sensor 901 is configured to, in response to receiving an acquisition instruction sent by an image recognition device, acquire the first image data of a target scene.

In some embodiments of the present disclosure, the image compression unit 902 is configured to obtain the second image data by performing RAW domain compression on the first image data at a target compression ratio.

In some embodiments of the present disclosure, the target compression ratio is greater than or equal to 5.

In some embodiments of the present disclosure, the microcontroller unit 903 is configured to transmit the second image data to the image recognition device by using a short-range communication technology.

In some embodiments of the present disclosure, the microcontroller unit 903 is further configured to control the image sensor 901 to be in a dormant state during a non-acquisition period.

FIG. 10 is a block diagram of an apparatus for image recognition according to some embodiments of the present disclosure. Referring to FIG. 10, the apparatus includes an image receiving unit 1001, an image decoding unit 1002, an image recognition unit 1003, and an output unit 1004.

The image receiving unit 1001 is configured to receive second image data sent by a pre-bound image acquisition device, where the second image data is obtained by the image acquisition device through performing image compression on first image data of a target scene.

The image decoding unit 1002 is configured to obtain fourth image data by performing image decoding on the second image data.

The image recognition unit 1003 is configured to obtain recognition information of the target scene by performing image recognition on the fourth image data through an image recognition model.

The output unit 1004 is configured to output the identification information.

It should be noted that the apparatus of this embodiment may be applied to an image recognition device.

In some embodiments of the present disclosure, the image receiving unit 1001 is configured to receive the second image data sent by the pre-bound image acquisition device by using a short-range communication technology.

In some embodiments of the present disclosure, the image decoding unit 1002 is configured to obtain the fourth image data by performing RAW image decoding on the second image data.

In some embodiments of the present disclosure, the apparatus for image recognition further includes an information receiving unit configured to receive user input information. Accordingly, the image recognition unit 1003 is configured to obtain the recognition information of the target scene by performing image recognition on the fourth image data based on the user input information through the image recognition model.

Regarding the apparatus in the above embodiments, the specific manner in which each module performs operations has been described in detail in the related method embodiments, and will not be described in detail here.

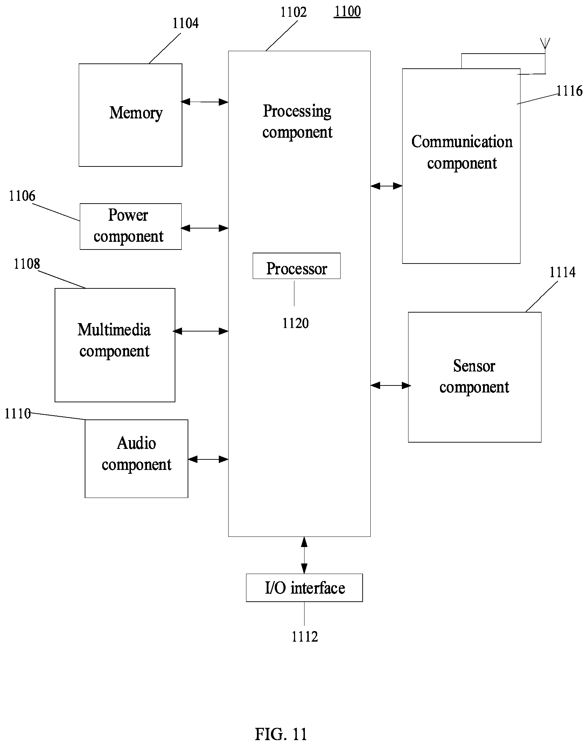

FIG. 11 is a block diagram of an electronic device according to some embodiments of the present disclosure. For example, the electronic device 1100 may be a mobile phone, a computer, a digital broadcast terminal, a message transceiving device, a game console, a tablet device, a medical device, a fitness device, a personal digital assistant, etc.

Referring to FIG. 11, the electronic device 1100 may include one or more of the following components: a processing component 1102, a memory 1104, a power component 1106, a multimedia component 1108, an audio component 1110, an input/output (I/O) interface 1112, a sensor component 1114, and a communication component 1116.

The processing component 1102 generally controls the overall operation of the electronic device 1100, such as operations associated with display, phone calls, data communications, camera operations, and recording operations. The processing component 1102 may include one or more processors 1120 to execute instructions to complete all or part of the steps of the above-described methods. In addition, the processing component 1102 may include one or more modules to facilitate interaction between the processing component 1102 and other components. For example, the processing component 1102 may include a multimedia module to facilitate interaction between the multimedia component 1108 and the processing component 1102.

The memory 1104 is configured to store various types of data to support the operation of the electronic device 1100. Examples of such data include instructions for any application or method operating on the electronic device 1100, contact data, phone book data, messages, pictures, videos, etc. The memory 1104 may be implemented by any type of volatile or nonvolatile storage device or a combination of them, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk or an optical disk.

The power component 1106 provides power to the various components of the electronic device 1100. The power component 1106 may include a power management system, one or more power supplies, and other components associated with generation, management, and distribution of power to the electronic device 1100.

The multimedia component 1108 includes a screen that provides an output interface between the electronic device 1100 and the user. In some embodiments, the screen may include a liquid crystal display (LCD) and a touch panel (TP). If the screen includes a touch panel, the screen may be implemented as a touch screen to receive input signals from the user. The touch panel includes one or more touch sensors to sense touch, slide, and gestures on the touch panel. The touch sensor may not only sense the boundaries of the touch or slide action, but also detect the duration and pressure associated with the touch or slide operation. In some embodiments, the multimedia component 1108 includes a front camera and/or a rear camera. When the electronic device 1100 is in an operating mode, such as a shooting mode or a video mode, the front camera and/or the rear camera may receive external multimedia data. Each of the front camera and the rear camera may be a fixed optical lens system or have a focal length and optical zoom capability.

The audio component 1110 is configured to output and/or input audio signals. For example, the audio component 1110 includes a microphone (MIC) configured to receive an external audio signal when the electronic device 1100 is in an operation mode, such as a call mode, a recording mode, and a speech recognition mode. The received audio signal may be further stored in the memory 1104 or sent via the communication component 1116. In some embodiments, the audio component 1110 also includes a speaker for outputting audio signals.

The I/O interface 1112 provides an interface between the processing component 1102 and peripheral interface modules, such as keyboards, click wheels, buttons, etc. These buttons may include but are not limited to a home button, a volume button, a start button, and a lock button.

The sensor assembly 1114 includes one or more sensors for providing various aspects of the status assessment of the electronic device 1100. For example, the sensor assembly 1114 may detect the on/off state of the electronic device 1100, the relative positioning of components, for example, the components may be the display and keypad of the electronic device 1100. The sensor assembly 1114 may also detect the position change of the electronic device 1100 or a component of the electronic device 1100, the presence or absence of contact between the user and the electronic device 1100, the orientation or acceleration/deceleration of the electronic device 1100, and the temperature change of the electronic device 1100. The sensor assembly 1114 may include a proximity sensor configured to detect the presence of a nearby object without any physical contact. The sensor assembly 1114 may also include an optical sensor, such as a CMOS or CCD image sensor, for use in imaging applications. In some embodiments, the sensor assembly 1114 may also include an accelerometer, a gyroscope sensor, a magnetic sensor, a pressure sensor, or a temperature sensor.

The communication component 1116 is configured to facilitate wired or wireless communication between the electronic device 1100 and other devices. The electronic device 1100 may access a wireless network based on a communication standard, such as WiFi, 3G, 4G, 5G, other communication standards, or a combination of them. In some embodiments of the present disclosure, the communication component 1116 receives a broadcast signal or broadcast-related information from an external broadcast management system via a broadcast channel. In some embodiments of the present disclosure, the communication component 1116 also includes a near field communication (NFC) module to facilitate short-range communication. For example, the NFC module may be implemented based on radio frequency identification (RFID) technology, infrared data association (IrDA) technology, ultra-wideband (UWB) technology, Bluetooth (BT) technology and other technologies.

In some embodiments of the present disclosure, the electronic device 1100 may be implemented by one or more application-specific integrated circuits (ASICs), digital signal processors (DSPs), digital signal processing devices (DSPDs), programmable logic devices (PLDs), field programmable gate arrays (FPGAs), controllers, microcontrollers, microprocessors, or other electronic components, to perform the above methods.

In some embodiments of the present disclosure, there is further provided a non-transitory computer-readable storage medium including an instruction, such as a memory 1104 including an instruction. The instruction may be executed by the processor 1120 of the electronic device 1100 to complete the above methods. For example, the non-transitory computer-readable storage medium may be a ROM, a random access memory (RAM), a CD-ROM, a magnetic tape, a floppy disk, an optical data storage device, etc.

In some embodiments of the present disclosure, there is provided a non-transitory computer-readable storage medium, and when an instruction in the storage medium is executed by a processor of a mobile terminal, the mobile terminal is caused to perform a method for image acquisition or a method for image recognition. The method for image acquisition includes:
acquiring first image data of a target scene; obtaining second image data by performing image compression on the first image data; and sending the second image data to a pre-bound image recognition device to cause the image recognition device to perform image recognition on the second image data through an image recognition model.

The method for image recognition includes:
receiving second image data corresponding to a target scene sent by a pre-bound image acquisition device; obtaining fourth image data by performing image decoding on the second image data; obtaining recognition information of the target scene by performing image recognition on the fourth image data through an image recognition model; and outputting the identification information.

In some embodiments of the present disclosure, there is further provided a computer program product, including a computer program/instruction. When the computer program/instruction is executed by a processor, a method for image acquisition or a method for image recognition is implemented. The method for image acquisition includes:
acquiring first image data of a target scene; obtaining second image data by performing image compression on the first image data; and sending the second image data to a pre-bound image recognition device to cause the image recognition device to perform image recognition on the second image data through an image recognition model.

The method for image recognition includes:
receiving second image data corresponding to a target scene sent by a pre-bound image acquisition device; obtaining fourth image data by performing image decoding on the second image data; obtaining recognition information of the target scene by performing image recognition on the fourth image data through an image recognition model; and outputting the identification information.

Those skilled in the art may easily think of other embodiments of the present disclosure after considering the description and practicing the present disclosure here. The present disclosure is intended to cover any variations, uses, or adaptations of the present disclosure that follow the general principles of the present disclosure and include common general knowledge or conventional technical means in the art that are not disclosed in the present disclosure.

## Claims

1. A method for image acquisition, comprising:
acquiring (S102) first image data of a target scene;
obtaining (S104) second image data by performing image compression on the first image data; and
sending (S106) the second image data to a pre-bound image recognition device to cause the image recognition device to perform image recognition on the second image data through an image recognition model.

2. The method for image acquisition according to claim 1, wherein obtaining (S104) the second image data by performing image compression on the first image data comprises:
obtaining the second image data by performing RAW domain compression on the first image data at a target compression ratio.

3. The method for image acquisition according to claim 2, wherein the target compression ratio is greater than or equal to 5.

4. The method for image acquisition according to any one of the preceding claims, wherein sending (S106) the second image data to the pre-bound image recognition device comprises:
transmitting the second image data to the image recognition device by using a short-distance communication technology.

5. The method for image acquisition according to any one of the preceding claims, wherein acquiring (S102) the first image data of the target scene comprises:
acquiring (S202) the first image data of the target scene according to a preset acquisition period;
wherein, the acquisition period is not higher than a preset period threshold.

6. The method for image acquisition according to any one of the preceding claims, wherein acquiring (S102) the first image data of the target scene comprises:
acquiring (S302) third image data, wherein an image resolution of the third image data is lower than an image resolution of the first image data;
performing (S304) image recognition on the third image data; and
in response to an image recognition result of the third image data being consistent with the target scene, acquiring (S306) the first image data of the target scene.

7. The method for image acquisition according to any one of the preceding claims, wherein acquiring (S102) the first image data of the target scene comprises:
in response to receiving an acquisition instruction sent by the image recognition device, acquiring (S402) the first image data of the target scene.

8. The method for image acquisition according to any one of claims 5 to 7, further comprising:
controlling an image sensor to be in a dormant state during a non-acquisition time period;
wherein, the image sensor is configured to acquire the first image data of the target scene.

9. A method for image recognition, comprising:
receiving (S502, S602) second image data corresponding to a target scene sent by a pre-bound image acquisition device;
obtaining (S504, S604) fourth image data by performing image decoding on the second image data;
obtaining (S506) recognition information of the target scene by performing image recognition on the fourth image data through an image recognition model; and
outputting (S508, S610) the identification information.

10. The method for image recognition according to claim 9, wherein obtaining (S506) the fourth image data by performing image decoding on the second image data comprises:
obtaining the fourth image data by performing RAW image decoding on the second image data.

11. The method for image recognition according to claim 9 or 10, wherein receiving (S502, S602) the second image data sent by the pre-bound image acquisition device comprises:
receiving the second image data sent by the pre-bound image acquisition device by using a short-distance communication technology.

12. The method for image recognition according to any one of claims 9 to 11, further comprising:
receiving (S606) user input information;
wherein, obtaining (S506) the recognition information of the target scene by performing image recognition on the fourth image data through the image recognition model comprises:
obtaining (S608) the recognition information of the target scene by performing image recognition on the fourth image data based on the user input information through the image recognition model.

13. An apparatus for image acquisition, comprising:
an image sensor (901), configured to acquiring first image data of a target scene;
an image compression unit (902), configured to obtain second image data by performing image compression on the first image data;
a microcontroller unit (903), configured to send the second image data to a pre-bound image recognition device to cause the image recognition device to perform image recognition on the second image data through an image recognition model.

14. An apparatus for image recognition, comprising:
an image receiving unit (1001), configured to receive second image data sent by a pre-bound image acquisition device; wherein the second image data is obtained by the image acquisition device through performing image compression on first image data of a target scene;
an image decoding unit (1002), configured to obtain fourth image data by performing image decoding on the second image data;
an image recognition unit (1003), configured to obtain recognition information of the target scene by performing image recognition on the fourth image data through an image recognition model; and
an output unit (1004), configured to output the identification information.

15. A non-temporary computer-readable storage medium, wherein, when an instruction in the storage medium is executed by a processor of a mobile terminal, the mobile terminal is caused to perform the method for image acquisition according to any one of claims 1 to 8 or the method for image recognition according to any one of claims 9 to 12.
